(19) Europäisches Patentamt / European Patent Office / Office européen des brevets

(11) **EP 3 485 731 B1**

(12) **EUROPEAN PATENT SPECIFICATION**

(45) Date of publication and mention
of the grant of the patent:
**23.02.2022 Bulletin 2022/08**

(21) Application number: **18206359.4**

(22) Date of filing: **14.11.2018**

(51) International Patent Classification (IPC):
*A01N 25/10* (2006.01)     *D06M 15/21* (2006.01)
*A01N 59/16* (2006.01)     *A01N 43/50* (2006.01)
*A01P 1/00* (2006.01)

(52) Cooperative Patent Classification (CPC):
**A01N 25/10; A01N 43/50; A01N 59/16;
D06M 11/83; D06M 13/368; D06M 15/3562;
D06M 16/00**

(54) **STABILIZATION OF COMPLEXED SILVER ION ON SOFT SURFACES**

STABILISIERUNG VON KOMPLEXIERTEN SILBERIONEN AUF WEICHEN OBERFLÄCHEN

STABILISATION D'UN COMPLEXE IONIQUE D'ARGENT SUR DES SURFACES MOLLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.11.2017 US 201762586919 P**

(43) Date of publication of application:
**22.05.2019 Bulletin 2019/21**

(73) Proprietors:
• **Nutrition & Biosciences USA 1, LLC
Rochester, NY 14623 (US)**
• **Rohm and Haas Company
Collegeville, PA 19426 (US)**

(72) Inventors:
• **VARGO, Kevin B.
Collegeville, PA 19426 (US)**
• **FRATTARELLI, David L.
Collegeville, PA 19426 (US)**
• **GALLAGHER, Michelle
Collegeville, PA 19426 (US)**

(74) Representative: **Houghton, Mark Phillip
Patent Outsourcing Limited
Cornerhouse
1 King Street
Bakewell
Derbyshire DE45 1DZ (GB)**

(56) References cited:
EP-A1- 2 228 486        EP-A1- 2 434 048
EP-A2- 1 584 235        EP-A2- 2 458 083
WO-A2-2017/116727       US-A1- 2010 143 494

## Description

This invention relates to a composition comprising complexed silver ion which is stable on a soft surface.

A composition comprising silver ion and an aminoalcohol is disclosed in U.S. Pat. No. 8,637,088. However, this reference does not disclose a composition which is stable on a soft surface.

EP-A2-1584235 discloses an antibacterial composition containing a metal complexed with a polymer. WP 2017/116727 discloses a composition and method for preparing a color stable and wash durable treated fabric with more even distribution of silver across the length of the treated textile.

The problem addressed by this invention is to provide a composition comprising complexed silver ion which is stable on a soft surface.

## STATEMENT OF THE INVENTION

The present invention in all its aspects is set out in the accompanying claims.

The present invention is directed to an aqueous composition comprising: (a) silver ion; (b) at least one polymer comprising at least 10 wt% polymerized units of vinylimidazole; and (c) at least one amino alcohol comprising at least two hydroxyl groups, comprising no carboxyl groups and having a vapor pressure at 25°C of no more than 0.025 Pa, and which is selected from the group consisting of diisopropanolamine (which is bis(2-hydroxypropyl)amine) and tris(hydroxymethyl)aminomethane; wherein the molar ratio of vinylimidazole: silver is at least 3:1.

The present invention is further directed to non-therapeutic method for treating soft surfaces with silver ion; said method comprising applying to said soft surface an aqueous composition comprising: (a) silver ion; (b) at least one polymer comprising at least 10 wt% polymerized units of vinylimidazole; and (c) at least one amino alcohol comprising at least two hydroxyl groups, comprising no carboxyl groups and having a vapor pressure at 25°C of no more than 0.025 Pa; , and which is selected from the group consisting of diisopropanolamine (which is bis(2-hydroxypropyl)amine) and tris(hydroxymethyl)aminomethane wherein the molar ratio of vinylimidazole: silver is at least 3:1.

## DETAILED DESCRIPTION OF THE INVENTION

Unless otherwise specified, temperatures are in degrees centigrade (°C) and references to percentages are percentages by weight (wt%). Unless otherwise specified, all operations were performed at room temperature (20-25 °C). Amounts of polymer are on a solids basis, i.e., not including any water or solvent which may be present with the polymer. Amounts of monomer are on the basis of solid polymer. The term "vinylimidazole" preferably refers to N-vinylimidazole. The term "silver ion" refers to Ag(I) ion.

Preferably, a polymer used in the aqueous composition comprises up to 100 wt% polymerized units of vinylimidazole; preferably at least 15 wt%, preferably at least 20 wt%, preferably at least 25 wt%, preferably at least 30 wt%, preferably at least 35 wt%; preferably no more than 95 wt%, preferably no more than 90 wt%, preferably no more than 85 wt%. Preferably, the polymer further comprises from 10 to 70 wt% of a polar monomer; preferably at least 15 wt%, preferably at least 20 wt%; preferably no more than 60 wt%, preferably no more than 50 wt%, preferably no more than 45 wt%. Polar monomers preferably are monomers having at least one carboxyl group, sulfonic acid group, phosphonic acid group or having polymerized units of ethylene oxide. Preferred polar monomers include, e.g., acrylic acid (AA), methacrylic acid (MAA), itaconic acid, maleic acid, fumaric acid, 2-acrylamido-2-methylpropanesulfonic acid and its sodium salt, (meth)acrylate esters of polymerized ethylene oxide units or mixed ethylene/propylene oxide units, providing that ethylene oxide residues are at least 50 wt % of the ethylene/propylene oxide residues (alternatively at least 75%, alternatively at least 90%) and combinations thereof. Preferably, ethylene oxide units or mixed ethylene/propylene oxide units are monoalkylated (e.g., polyethylene glycol monomethyl ether) and have Mn of at least 150, preferably at least 300; preferably no more than 1000, preferably no more than 700, preferably no more than 600. Preferably, the polymer is an "acrylic polymer," i.e., a polymer having at least 70 wt% acrylic monomers, preferably at least 80 wt%, preferably at least 90 wt%, preferably at least 95 wt%. Acrylic monomers include (meth)acrylic acids, their salts and their $C_1$-$C_{22}$ alkyl or hydroxyalkyl esters; crotonic acid, itaconic acid, fumaric acid, maleic acid, maleic anhydride, (meth)acrylamides, (meth)acrylonitrile and alkyl or hydroxyalkyl esters of crotonic acid, itaconic acid, fumaric acid or maleic acid.

In a preferred embodiment, the polymer further comprises polymerized units of other ethylenically unsaturated monomers, e.g., (meth)acrylate esters, vinyl esters, (meth)acrylamides. Small amounts of hydrophobic monomers, e.g., higher alkyl (meth)acrylates (e.g., C-4 and higher), may be present to the extent they do not compromise water solubility. In a preferred embodiment, the polymer comprises from 0 to 70 wt% polymerized units of alkyl or hydroxyalkyl (meth)acrylates; preferably no more than 60 wt%, preferably no more than 55 wt%; preferably at least 5 wt%, preferably at least 10 wt%. Preferably, alkyl groups are $C_1$-$C_8$ alkyl groups, preferably $C_1$-$C_6$, preferably $C_1$-$C_4$. Preferably, hydroxyalkyl groups are $C_2$-$C_8$ hydroxyalkyl groups, preferably $C_2$-$C_6$, preferably $C_2$-$C_4$.

Preferably, the molar ratio of vinylimidazole:silver is at least 3.5:1, preferably at least 4:1, preferably at least 5:1, preferably at least 8:1; preferably no more than 100:1, preferably no more than 50:1, preferably no more than 20:1. Preferably, the polymer has a number-average molecular weight (Mn) from 1000 to 300,000; preferably at least 5000, preferably at least 10000; preferably no more than 200000, preferably no more than 100000, preferably no more than 50000. Preferably, the concentration of silver ion in the aqueous composition is from 0.5 to 100 ppm; preferably at least 2 ppm, preferably at least 5 ppm, preferably at least 10 ppm; preferably no more than 60 ppm, preferably no more than 50 ppm, preferably no more than 40 ppm. Preferably, the source of silver ion is a water-soluble silver salt, e.g., silver nitrate, silver/amine complexes and silver acetate. Preferably, the concentration of polymer in the aqueous composition is from 0.0001 to 5 wt%; preferably at least .001 wt%, preferably at least .01 wt%; preferably no more than 3 wt%, preferably no more than 1 wt%.

The amino alcohol is selected from the group consisting of diisopropanolamine (bis(2-hydroxypropyl)amine), vapor pressure at 25°C of 0.017 Pa, "DIPA") and tris(hydroxymethyl)aminomethane (vapor pressure at 25°C of 0.003 Pa, "TRIS"). Preferably, the molar ratio of amino alcohol:silver is at least 1:1, preferably at least 3:1, preferably at least 10:1; preferably no more than 10000:1, preferably no more than 5000:1, preferably no more than 2000:1. Preferably, the concentration of amino alcohol in the aqueous composition is from 0.1 to 10 wt%; preferably at least 1 wt%, preferably at least 2 wt%; preferably no more than 7 wt%, preferably no more than 5 wt%.

In the non-therapeutic method of this invention, soft surfaces include fabrics, fibers, foams, sponges, films, alginates, hydrogels, and hydrocolloids. Preferably, fabrics and fibers include, e.g., silk, cotton, wool, flax, fur, hair, cellulose, ramie, hemp, linen, leather, synthetic leather, wood pulp, polyolefins, such as polyethylene, polypropylene and polybutylene; halogenated polymers, such as polyvinyl chloride; polyaramids, such as poly-p-phenyleneteraphthalamid (e.g. KEVLAR® fibers), poly-m-phenyleneteraphthalamid (e.g., NOMEX® fibers); melamine and melamine derivatives (e.g., BASOFIL® fibers); polyesters, such as polyethylene terephthalate, polyester/polyethers; polyamides, such as nylon 6 and nylon 6,6; polyurethanes, such as TECOPHILIC® aliphatic thermoplastic polyurethanes available from Noveon; acetates; rayon acrylics; and combinations thereof. Preferred fabrics include cotton, polyester, cotton-polyester blends and polyolefins. The aqueous composition may be applied to the surface in any manner, preferably by spraying, brushing, dipping, coating, padding and exhaustion; preferably spraying.

The composition of the current invention may further include secondary odor absorbing, capturing, or inhibiting materials including, e.g., metal oxides, titanium dioxide, cyclodextrin, chitosan, zeolites, molecular sieves, resins, activated carbon, silver salts, copper salts, iron salts, zinc salts, zinc salts of fatty acids, zinc ricinoleate, metal-polymer complexes, silica gel, silicates, crystalline silicates, amorphous silicates, clays, montmorillonite, diatomaceous earth, oxidizers, peroxides, hydrogen peroxide, and alkaline buffers.

EXAMPLES

**Materials:**

Sodium Bicarbonate, Fisher Chemical
Polyvinylpyrolidone (average MW 360k), Sigma
Carboxymethyl cellulose, sodium salt, average MW 250000 - ACROS Organics
2-hydroxyethyl cellulose - Cellosize - Dow Chemical
Poly(ethylene glycol), BioUltra, MW 4000
N,N-Bis(2-hydroxyethyl)glycine (BICINE), Sigma
N-[Tris-(hydroxymethyl)-methyl]-glycine (Tricine), Sigma

**Methods:**

**Fabric Treatment**

A Lab scale padding machine from Werner Mathis AG (Model: CH-8155 VFM28888) was used to apply finishing chemicals to fabric samples.

First the wet-pick up rate (WPUR) is determined to calculate the concentration of antimicrobial formulation solution needed to achieve a target silver loading on the dried textile. The roller pressure is set to 3 barg (404 kPa) initially. Then a 12" by 10" (30 by 25 cm) swatch of fabric is weighed out. The swatch is soaked in a deionized water bath for 3 to 8 seconds until it has fully absorbed the water. Immediately after, the wet fabric is passed through the spinning rollers at the 3 barg pressure setting. The fabric is then reweighted to determine the increase in weight due to absorption of water. The WPUR is calculated by the difference in the weight of the wet fabric after going through the rollers and the dried fabric weight divided by the dried fabric weight. If the wet pick-up rate does not match the desired value the pressure of the padding rollers is adjusted up or down to achieve the desired values.

Second, the application bath solutions are prepared to treat each textile swatch. The concentration of silver in the bath is calculated based on the initial concentrate solution and the wet pick-up rate. The calculation of bath concentration of an antimicrobial formulation is calculated by dividing the target silver level by the active loading in the antimicrobial formulation and then dividing by the wet pick-up rate. For example to target a theoretical 30 ppm of silver on cotton fabric with a 100% wet pick-up rate using an antimicrobial formulation with 1000 ppm of silver, would require 30 ppm Ag target/1000ppm Ag in formulation/1.00 WPUR*100%, or 3.0 g antimicrobial formulation into 100 g.

The 30 ppm silver target fabric loading for cotton would be simply formulated by weighing out 3.0 grams of the antimicrobial formulation and mixing it into 97.0 grams of deionized water.

Lastly, the treatment of each fabric was carried out in the padding machine using the pressure settings determined above to achieve the desired wet pick-up rate for each fabric swatch. Each silver solution was poured into the trough on the padding machine prior to treatment. Then fabric samples were dipped into silver solutions for 3 to 8 seconds until soaked. Immediately, the wet fabric was then passed through the rollers to achieve the desired wet pick-up weights. Then fabrics were placed onto a device that stretches the fabric taught and dried in a convection oven at 150°C for 2 minutes.

### Fabric weathering

All fabrics were aged in a climate chamber (Model: KBWF 720 climate chamber, Binder Company) to accelerate color change. The 12" by 10" treated swatches of fabric were cut in half lengthwise to produce two strips of 6" by 10" (15 by 25 cm). One strip was placed horizontally in the chamber for aging and the other was placed under ambient dark conditions. The chamber was then set to 30°C and cycled humidity as follows: 30% relative humidity for 4 hours, 2 hour transition from 30% to 90%, hold at 90% for 4 hours, 2 hour transition from 90% to 30%, and repeated. This weathering cycle was repeated until the sample was removed. The light source was a LUMILUX Cool Daylight (OSRAM L36w/865 lighting bulb) which was kept on during the weathering process.

### Color measurement

The color of fabrics after weathering was measured using a Hunterlab Spectrophotometer (Model: Labscan XE) with illumination from a pulsed xenon arc source, a 0 degree illumination angle and a 45 degree viewer angle with a 13mm (0.5") measuring area. Measurements were performed on 2 layers of the experimental fabrics using standard white tile as the backing. The untreated standard cotton were used as control fabric to which all experimental fabric samples were compared to evaluate total color change ($\Delta E^*_{ab}$). Larger $\Delta E^*_{ab}$ corresponds with greater fabric color change. The calculation of $\Delta E^*_{ab}$ is based on the measurements of L, a, and b which describe the coordinate space of light/dark, red/green, and blue/yellow. The $\Delta E^*_{ab}$ value is calculated as the square root of the sum of square differences between the measured sample values and the control sample.

$$\Delta E^*_{ab} = \sqrt{(L_i - L_0)^2 + (a_i - a_0)^2 + (b_i - b_0)^2}$$

The subscript 0 represents the control sample values and i represents the individual sample measurement. Each fabric swatch was measured at three locations and averages of L, a, and b values were used on the $\Delta E^*_{ab}$ calculations.

Values of $\Delta E^*_{ab}$ below approximately 1.3 are preferred.

### Headspace Gas Chromatography

The headspace volatiles of each sample vial were analyzed using headspace sampling combined with gas chromatography with mass selective detection (HS-GC-MS) close to body temperature (37°C). The instrumentation was an Agilent GC-MS model 6890/5973 equipped with a Perkin Elmer TurboMatrix 40 Trap Headspace Sampler. The instrument parameters are listed in the table below. Samples were prepared as described below in the double vial odor capture testing and bulk material odor adsorption sections. The calibration standards (described above) were included in each sequence, as well as several air blanks. The headspace analysis of the standards was done in a full-evaporation mode to eliminate matrix effects that can occur in static headspace sampling. In this mode, a small sample size (~15-20 mg) is used, and the headspace vial temperature is set sufficiently high enough to allow for full evaporation of the volatile of interest. For this analysis, the standard samples were heated to 150°C for 10 minutes prior to sampling. The ppm volume/ volume (v/v) concentration of each calibrated compound in the sample headspace was then determined using the linear-least-squares equation from the calibration plot for that compound (peak area vs. v/v concentration, eq. 1).

Equation 1:

$$\frac{vol}{vol}conc\,(std.) = \frac{Std.conc.ppm \times standard\ weight\ (mg)}{1{,}000{,}000}$$
$$\times \frac{0.08206\ \frac{mL\ x\ atm}{mmol\ x\ K} \times 298K}{molecular\ weight\left(\frac{mg}{mmol}\right) \times 1\ atm \times 22\ mL}$$

$$ppm\frac{vol}{vol}(sample) = \frac{compound\ area}{calibration\ curve\ slope} \times 1{,}000{,}000$$

Percent abatement is calculated compared to the headspace concentrations of the acids in vials with no added chemistry (average of 3).

| Instrument | Agilent 6890GC with 5973 MS detector and a Perkin Elmer TurboMatrix™ 40 Trap Headspace Sampler | |
|---|---|---|
| **GC-MS Parameters** | | |
| Column | ZB-WAXplus™: | 30 m x 0.25 mm x 0.5 $\mu$m |
| | Model Number: | Phenomenex 7HG-G013-17 |
| | Mode: | Constant pressure |
| | Nominal init pressure: | 11.00 psi |
| | Average velocity: | 43 cm/sec |
| | Gas type: | Helium |
| Inlet | Mode: | Split |
| | Temperature: | 180°C |
| | Pressure: | 11.00 psi |
| | Split ratio: | 0.2:1 |
| | Split flow: | 0.3 mL/min |
| | Total flow: | 4.3 mL/min |
| Oven Program | Initial temperature: | 40°C, hold for 5 min |
| | Temperature ramp: | 20°C/min (Linear) |
| | Final temperature: | 240°C, hold for 9 min |
| | Total run time: | 24.00 min |
| Mass Detector | Acquisition Mode: | SCAN |
| | Resulting EM voltage: | 1976 |
| | Low Mass: | 20.0 |
| | High Mass: | 300.0 |
| | Quad/Source Temps: | 150°C/230°C |
| **Headspace Autosampler parameters** | | |
| Oven Temperature | 37°C (samples) or 150°C (standards) | |
| Needle Temperature | 60°C (samples) or 175°C (standards) | |
| Transfer Line Temperature | 100°C (samples) or 200°C (standards) | |
| Vial Equilibrium Time | 10 min | |
| Pressurization Time | 2.0 min | |
| Injection Time | 0.1 min | |
| GC Cycle Time | 35 min | |

(continued)

| Headspace Autosampler parameters | |
|---|---|
| Carrier | 25 psi |
| Operating Mode | Constant |
| Injection Mode | Time |

## Example 1: Screening of alkaline agents for odor control

Multiple chemistries were screened for their ability to capture volatile fatty acids using gas chromatography-mass spectroscopy. Chemistries (100 mg) were added into a 22 ml gas chromatography (GC) vial. A 2 mL liquid chromatography (LC) vial was inserted into the GC vial. Using an air tight syringe, 5 $\mu$L of a standard containing 1% butyric acid and 1% isovaleric acid in pure ethanol was added to the LC vial eliminating direct contact between the odor capture chemistries and the volatile fatty acids. Vials were crimped creating an air tight seal and incubated at 37°C for 24 hours. Headspace concentrations of the acids were measured as described above.

| | Percent Abatement | |
|---|---|---|
| Chemistry | Butyric acid | Isovaleric acid |
| Sodium Bicarbonate | 99.3 | 99 |
| Tricine | 21.2 | 21.4 |
| Bicine | 29.9 | 32.5 |
| TAPS | 31.8 | 32.7 |
| Monoethanolamine | 99.7 | 99.7 |
| Diisopropanolamine | 99.8 | 99.8 |
| TRIS | 99.7 | 99.7 |

## Example 2: Fabric treated with silver salts and odor control agents

Treatment bath solutions were prepared with silver nitrate and odor control additives to a final concentration of 30 ppm silver and 1% odor control additive. Treatment solutions were padded using the method described above with a wet weight pickup of 100% +/- 10%. Treated fabrics were placed in a binder chamber for 4 days and color change was measured by $\Delta E^*_{ab}$ as described above.

| Odor Neutralizer | $\Delta E^*_{ab}$ |
|---|---|
| None | 10.9 |
| Sodium Bicarbonate | 19.6 |
| TRIS | 2.0 |
| DIPA | 6.2 |
| MEA | 14.0 |

## Example 3: Fabric treated with silver salts, odor control agents, and silver binding polymers

Treatment bath solutions were prepared with the commercial silver containing antimicrobial agent SILVADUR™ 930 (VI: Silver molar ratio 3.6:1) and odor control additives to a final concentration of 30 ppm silver and 1% odor control additive. Treatment solutions were padded using the method described above with a wet weight pickup of 100% +/- 10%. Treated fabrics were placed in a binder chamber for 4 days and color change was measured by $\Delta E^*_{ab}$ as described above.

| Odor Neutralizer | Delta E |
|---|---|
| None | 0.1 |
| Sodium Bicarbonate | 1.5 |
| TRIS | 0.2 |

(continued)

| Odor Neutralizer | Delta E |
|---|---|
| DIPA | 0.6 |
| MEA | 10.5 |

## Example 4: Polymer synthesis

Vinyl imidazole containing polymers were synthesized using methods outlined in US7390774B2 or US7927379B2.

| Component | Polymer 1 | Polymer 2 | Polymer 3 | Polymer 4 (comparative) |
|---|---|---|---|---|
| Butyl acrylate (BA) | - | 15 | - | 50 |
| Vinylimidazole (VI) | 75 | 45 | 100 | - |
| Acrylic acid (AA) | - | 40 | - | 50 |
| Poly(ethylene glycol) methyl ether methacrylate (Mn 400) | 25 | - | - | - |
| Solids (wt%) | 32.0 | 32.0 | 8.0 | 29.8 |

## Example 5: Fabric treated with silver salts, odor control agents, and hydrophilic polymers

Treatment bath solutions were prepared with various hydrophilic polymers (195 ppm polymer solids), silver nitrate (30 ppm silver), and TRIS (1:1 molar ratio TRIS:Ag). Treatment solutions were padded using the method described above with a wet weight pickup of 100% +/- 10%. Treated fabrics were placed in a binder chamber for 1 day and color change was measured by Delta E as described above.

| Sample | Delta E |
|---|---|
| Untreated Exposed Cotton Control | 0.3 |
| PEG (4000 MW) | 8.33 |
| PVP (360k) | 14.0 |
| Carboxymethyl cellulose | 24.2 |
| Hydroxyethyl cellulose | 9.5 |
| Polymer 1 (6:1 VI:Ag) | 0.1 |
| Polymer 2 (3.6:1 VI:Ag) | 1.1 |
| Polymer 3 (8:1 VI:Ag) | 0.3 |
| Polymer 4 (comparative) | 21.1 |

## Example 6: Spray formulations

Odor control spray formulations were created in commercially available spray bottles with 3 ppm silver delivered with Polymer 2 at a VI: silver ratio of 3.6, and 2% of an odor neutralizing salt. Solutions were sprayed onto swatches of cotton to a wet weight pickup of 100% +/- 10%. The swatches were allowed to air dry. The process was repeated for the desired number of applications. Treated fabrics were placed in a binder chamber for 7 days and color change was measured by Delta E as described above.

| Odor Absorber | Delta E | |
|---|---|---|
| | 1 Application | 5 Applications |
| None | 0.68 | 0.35 |
| Sodium Bicarbonate | 0.86 | 1.39 |

(continued)

| Odor Absorber | Delta E | |
|---|---|---|
| | 1 Application | 5 Applications |
| TRIS | 0.35 | 0.31 |
| DIPA | 0.63 | 0.88 |

## Claims

1. An aqueous composition comprising: (a) silver ion; (b) at least one polymer comprising at least 10 wt% polymerized units of vinylimidazole; and (c) at least one amino alcohol comprising at least two hydroxyl groups, comprising no carboxyl groups and having a vapor pressure at 25°C of no more than 0.025 Pa, and which is selected from the group consisting of diisopropanolamine (which is bis(2-hydroxypropyl)amine) and tris(hydroxymethyl)aminomethane; wherein the molar ratio of vinylimidazole: silver is at least 3:1.

2. The aqueous composition of claim 1 in which the polymer comprises at least 20 wt% polymerized units of vinylimidazole.

3. The aqueous composition of claim 1 in which the molar ratio of vinylimidazole: silver is at least 3.5:1.

4. The aqueous composition of claim 3 in which the aqueous composition comprises from 0.5 to 100 ppm silver ion.

5. The aqueous composition of claim 4 in which the polymer further comprises from 10 to 70 wt% of a polar monomer.

6. The aqueous composition of any one of claims 1 to 5, wherein the at least one amino alcohol is diisopropanolamine (which is bis(2-hydroxypropyl)amine).

7. The aqueous composition of any one of claims 1 to 5, wherein the at least one amino alcohol is tris(hydroxymethyl)aminomethane.

8. A non-therapeutic method for treating soft surfaces with silver ion; said method comprising applying to said soft surface an aqueous composition comprising: (a) silver ion; (b) at least one polymer comprising at least 10 wt% polymerized units of vinylimidazole; and (c) at least one amino alcohol comprising at least two hydroxyl groups, comprising no carboxyl groups and having a vapor pressure at 25°C of no more than 0.025 Pa, and which is selected from the group consisting of diisopropanolamine (bis(2-hydroxypropyl)amine) and tris(hydroxymethyl)aminomethane; wherein the molar ratio of vinylimidazole: silver is at least 3:1.

9. The method of claim 8 in which the polymer comprises at least 20 wt% polymerized units of vinylimidazole.

10. The method of claim 9 in which the molar ratio of vinylimidazole: silver is at least 3.5:1 and the aqueous composition comprises from 0.5 to 100 ppm silver ion.

11. The method of any one of claims 8 to 10, wherein the at least one amino alcohol is diisopropanolamine (which is bis(2-hydroxypropyl)amine).

12. The method of any one of claims 8 to 10, wherein the at least one amino alcohol is tris(hydroxymethyl)aminomethane.

## Patentansprüche

1. Wässrige Zusammensetzung, umfassend: (a) Silberion; (b) mindestens ein Polymer, das mindestens 10 Gew.-% polymerisierte Einheiten von Vinylimidazol umfasst; und (c) mindestens einen Aminoalkohol, der mindestens zwei Hydroxylgruppen umfasst, keine Carboxylgruppen umfasst und einen Dampfdruck bei 25 °C von nicht mehr als 0,025 Pa aufweist und aus der Gruppe bestehend aus Diisopropanolamin (wobei es sich um Bis(2-hydroxypropyl)amin handelt) und Tris(hydroxymethyl)aminomethan ausgewählt ist; wobei das Molverhältnis von Vinylimidazol:Silber mindestens 3:1 beträgt.

2. Wässrige Zusammensetzung nach Anspruch 1, wobei das Polymer mindestens 20 Gew.-% polymerisierte Einheiten von Vinylimidazol umfasst.

3. Wässrige Zusammensetzung nach Anspruch 1, wobei das Molverhältnis von Vinylimidazol:Silber mindestens 3,5:1 beträgt.

4. Wässrige Zusammensetzung nach Anspruch 3, wobei die wässrige Zusammensetzung 0,5 bis 100 ppm Silberion umfasst.

5. Wässrige Zusammensetzung nach Anspruch 4, wobei das Polymer ferner 10 bis 70 Gew.-% eines polaren Monomers umfasst.

6. Wässrige Zusammensetzung nach einem der Ansprüche 1 bis 5, wobei es sich bei dem mindestens einen Aminoalkohol um Diisopropanolamin (wobei es sich um Bis(2-hydroxypropyl)amin handelt) handelt.

7. Wässrige Zusammensetzung nach einem der Ansprüche 1 bis 5, wobei es sich bei dem mindestens einen Aminoalkohol um Tris(hydroxymethyl)aminomethan handelt.

8. Nichttherapeutisches Verfahren zum Behandeln von weichen Oberflächen mit Silberion; bei dem man auf die weiche Oberfläche eine wässrige Zusammensetzung, umfassend: (a) Silberion; (b) mindestens ein Polymer, das mindestens 10 Gew.-% polymerisierte Einheiten von Vinylimidazol umfasst; und (c) mindestens einen Aminoalkohol, der mindestens zwei Hydroxylgruppen umfasst, keine Carboxylgruppen umfasst und einen Dampfdruck bei 25 °C von nicht mehr als 0,025 Pa aufweist und aus der Gruppe bestehend aus Diisopropanolamin (Bis(2-hydroxypropyl)amin) und Tris(hydroxymethyl)amino-methan ausgewählt ist; wobei das Molverhältnis von Vinylimidazol:Silber mindestens 3:1 beträgt; aufbringt.

9. Verfahren nach Anspruch 8, wobei das Polymer mindestens 20 Gew.-% polymerisierte Einheiten von Vinylimidazol umfasst.

10. Verfahren nach Anspruch 9, wobei das Molverhältnis von Vinylimidazol:Silber mindestens 3,5:1 beträgt und die wässrige Zusammensetzung 0,5 bis 100 ppm Silberion umfasst.

11. Verfahren nach einem der Ansprüche 8 bis 10, wobei es sich bei dem mindestens einen Aminoalkohol um Diisopropanolamin (wobei es sich um Bis(2-hydroxypropyl)amin handelt) handelt.

12. Verfahren nach einem der Ansprüche 8 bis 10, wobei es sich bei dem mindestens einen Aminoalkohol um Tris(hydroxymethyl)aminomethan handelt.

## Revendications

1. Composition aqueuse comprenant : (a) des ions argent ; (b) au moins un polymère comprenant au moins 10 % en poids de motifs polymérisés de vinylimidazole ; et (c) au moins un aminoalcool comprenant au moins deux groupes hydroxyle, ne comprenant pas de groupes carboxyle et présentant une pression de vapeur à 25 °C non supérieure à 0,025 Pa, et qui est choisi dans le groupe constitué par la diisopropanolamine (qui est la bis(2-hydroxypropyl)amine) et le tris(hydroxyméthyl)aminométhane ; le rapport molaire de vinylimidazole : argent étant d'au moins 3 : 1.

2. Composition aqueuse selon la revendication 1 dans laquelle le polymère comprend au moins 20 % en poids de motifs polymérisés de vinylimidazole.

3. Composition aqueuse selon la revendication 1 dans laquelle le rapport molaire de vinylimidazole : argent est d'au moins 3,5 : 1.

4. Composition aqueuse selon la revendication 3 dans laquelle la composition aqueuse comprend de 0,5 à 100 ppm d'ions argent.

**5.** Composition aqueuse selon la revendication 4 dans laquelle le polymère comprend en outre de 10 à 70 % en poids d'un monomère polaire.

**6.** Composition aqueuse selon l'une quelconque des revendications 1 à 5, l'au moins un aminoalcool étant la diisopropanolamine (qui est la bis(2-hydroxypropyl)amine).

**7.** Composition aqueuse selon l'une quelconque des revendications 1 à 5, l'au moins un aminoalcool étant le tris(hydroxyméthyl)aminométhane.

**8.** Procédé non thérapeutique pour le traitement de surfaces souples avec des ions argent ; ledit procédé comprenant l'application à ladite surface souple d'une composition aqueuse comprenant : (a) des ions argent ; (b) au moins un polymère comprenant au moins 10 % en poids de motifs polymérisés de vinylimidazole, et (c) au moins un aminoalcool comprenant au moins deux groupes hydroxyle, ne comprenant pas de groupes carboxyle et présentant une pression de vapeur à 25 °C non supérieure à 0,025 Pa, et qui est choisi dans le groupe constitué par la diisopropanolamine (bis(2-hydroxypropyl)amine) et le tris(hydroxyméthyl)aminométhane ; le rapport molaire de vinylimidazole : argent étant d'au moins 3 : 1.

**9.** Procédé selon la revendication 8 dans lequel le polymère comprend au moins 20 % en poids de motifs polymérisés de vinylimidazole.

**10.** Procédé selon la revendication 9 dans lequel le rapport molaire de vinylimidazole : argent est d'au moins 3,5 : 1 et la composition aqueuse comprend de 0,5 à 100 ppm d'ions argent.

**11.** Procédé selon l'une quelconque des revendications 8 à 10, l'au moins un aminoalcool étant la diisopropanolamine (qui est la bis(2-hydroxypropyl)amine).

**12.** Procédé selon l'une quelconque des revendications 8 à 10, l'au moins un aminoalcool étant le tris(hydroxyméthyl)aminométhane.

**EP 3 485 731 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8637088 B
- EP 1584235 A2
- WO 2017116727 A
- US 7390774 B2
- US 7927379 B2